# EUROPEAN PATENT SPECIFICATION

(11) **EP 3 162 603 B1**
(45) Date of publication and mention of the grant of the patent: **17.04.2019**
(21) Application number: 15192122.8
(22) Date of filing: 29.10.2015
(51) Int. Cl.: B60J 7/00

(54) **OPEN ROOF CONSTRUCTION FOR A VEHICLE**
OFFENE DACHKONSTRUKTION FÜR EIN FAHRZEUG
CONSTRUCTION DÉCAPOTABLE POUR VÉHICULE

(43) Date of publication of application: 03.05.2017
(73) Proprietor: Inalfa Roof Systems Group B.V., 5804 AB Venray (NL)
(72) Inventor: NELLEN, Marcel Johan Christiaan, 5815 AR MERSELO (NL); RIKKERT, Robert, 5672 VS NUENEN (NL)
(74) Representative: De Vries & Metman

(56) References cited:
- EP-A1- 1 882 604
- EP-A1- 2 857 241
- DE-B3-102005 056 331

## Description

The invention relates to an open roof construction according to the preamble of claim 1.

An open roof construction of this type is for example known from US 6,546,990 and DE 10 2005 056 331 B3. The transverse guide in the first document is shaped like a convex arch (tunnel) and the screen is guided by the upper surface of the transverse guide, while the second document discloses two transverse guides, one guiding the upper and one guiding the lower surface of the screen.

It is an object of the invention to further improve the guidance and shape of the screen.

According to a first aspect, the open roof construction according to the invention includes the features of claim 1.

This at least one longitudinal guide is able to guide the screen along its length between the transverse guide and the beam, thereby enabling guidance of the screen close to the panel of the open roof construction and preventing sagging of the screen between the transverse guide and beam.

Preferably, the beam has a shape in transverse direction which is substantially similar to that of the transverse guide, so that the shape of the screen can remain the same along its length.

In one embodiment, at least the transverse guide has a central concave section and a convex section on either side thereof. This maximizes the head room of the occupants of the vehicle which are generally sitting between the centre and the sides of the vehicle. The central concave section disguises any sagging in the middle of the screen.

The transverse guide may guide the upper and lower surfaces of the screen substantially along the complete width of the screen, or may guide the upper surface of the screen only in the concave section. This would be sufficient as the tension and gravity will make the screen contact the transverse guide in the convex sections.

The transverse guide may have upper and lower guide parts that overlap at least partly when viewed from above in order to guide the screen in an efficient manner.

The lateral side edges of the screen are preferably guided by lateral guides extending in longitudinal direction in order to properly stretch the screen in transverse direction.

The longitudinal guide may guide the screen at the bottom of the concave portion of the screen in order to properly maintain the concave shape of the screen between the transverse guide and the beam.

In another embodiment, one longitudinal guide extends in the middle of the roof opening at a level higher than the lateral guides in order to maximize the headspace of the occupants and/or prevent sagging.

In yet another embodiment, two longitudinal guides extend next to but at a higher level than the lateral guides. This can maximize the headroom for the occupants of the vehicle.

In a particular embodiment, the transverse guide guides at least a part of both the upper and lower surfaces of the screen in order to urge the screen into a partly convex and partly concave shape.

Due to this special contour of the transverse guide, the screen may be adapted to the contour of the vehicle roof and may be shaped such that maximum headroom for the vehicle's occupants is created This concave shape is made possible by the transverse guide that guides both the upper and lower surfaces of the screen at least in the concave section of the transverse guide.

The at least one longitudinal guide may then be positioned at the bottom of the concave shape and includes a guide groove, the screen comprising one or more guide feet adapted to engage the guide groove on the one hand and adapted to lie flat against the screen when it is wound on the other hand.

In this manner, the screen is urged into a wavelike shape which is guided along the complete length of the screen.

It is possible that the central longitudinal guide also guides a drive cable extending between the beam and a drive motor. Thus, only one drive cable is necessary for driving the beam of the sunshade screen.

Further features and advantages of the invention follow from the below description with reference to the drawings showing, in a schematic and simplified form, embodiments of the invention by way of example.
Fig. 1 is a longitudinal sectional view of a front portion of an open roof construction for a vehicle as built into a vehicle roof.
Fig. 1A is a perspective view of a first embodiment of the sunshade assembly for use in the open roof construction of Fig. 1.
Fig. 3 is an enlarged sectional view according to the line II-II in Fig. 1A.

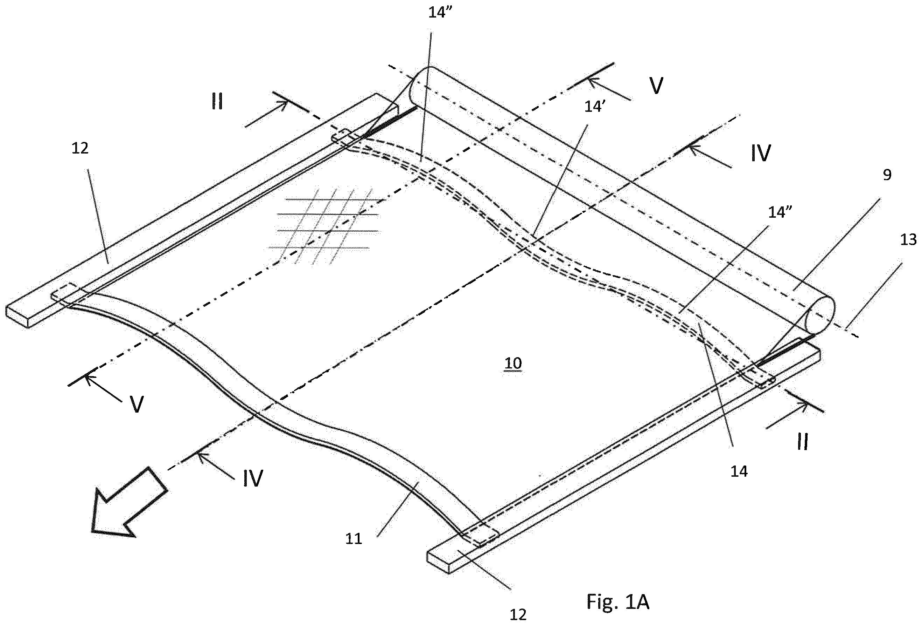

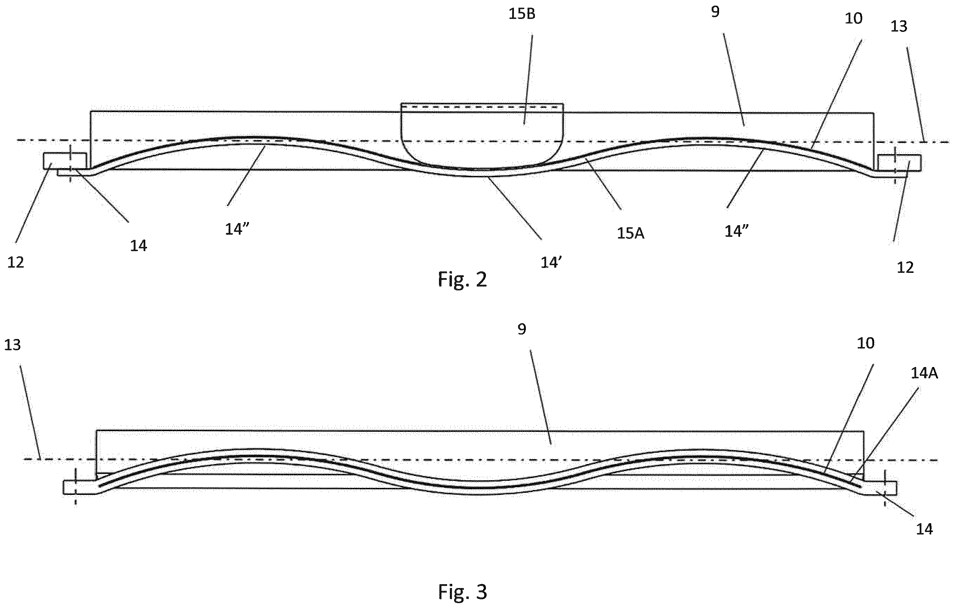

Fig. 2 is a sectional view corresponding to that of Fig. 3, but showing a different embodiment of the sunshade assembly.

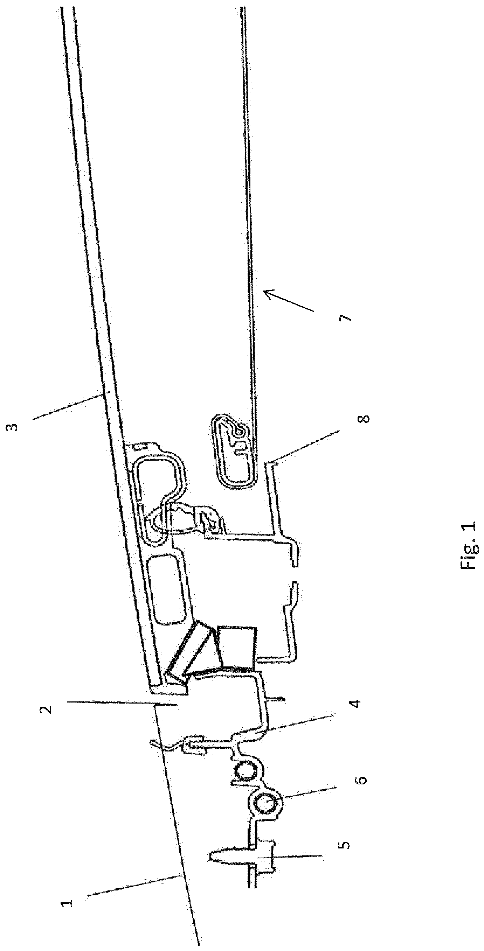

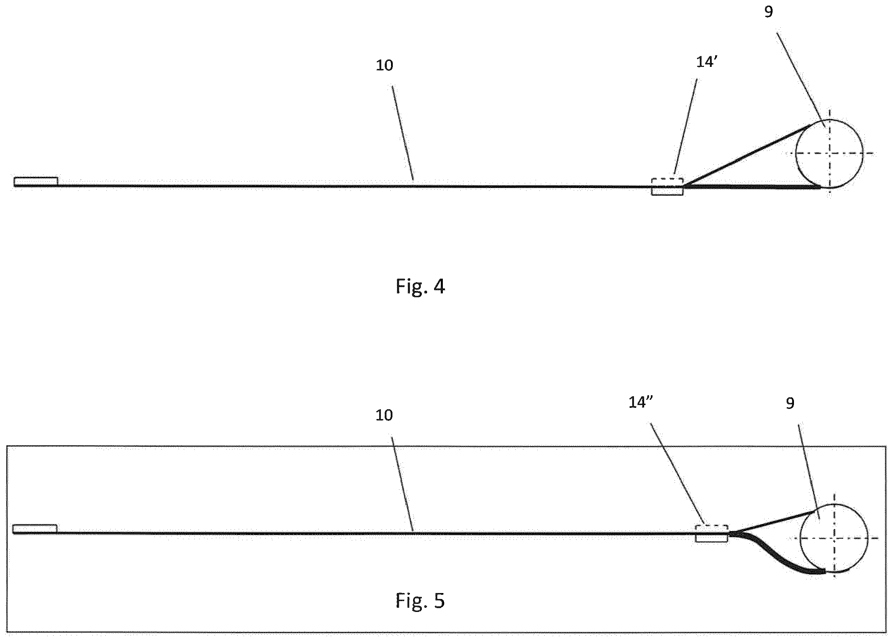

Figs. 4 and 5 are enlarged sectional views along the lines IV-IV and V-V in Fig. 1A, respectively.

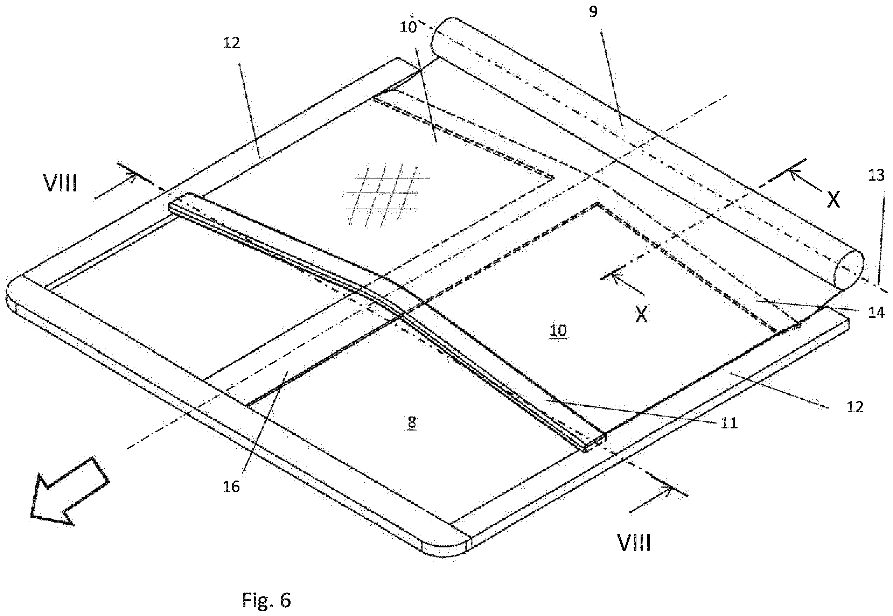

Fig. 6 is a view corresponding to that of Fig. 1A but showing a further embodiment of the sunshade assembly.

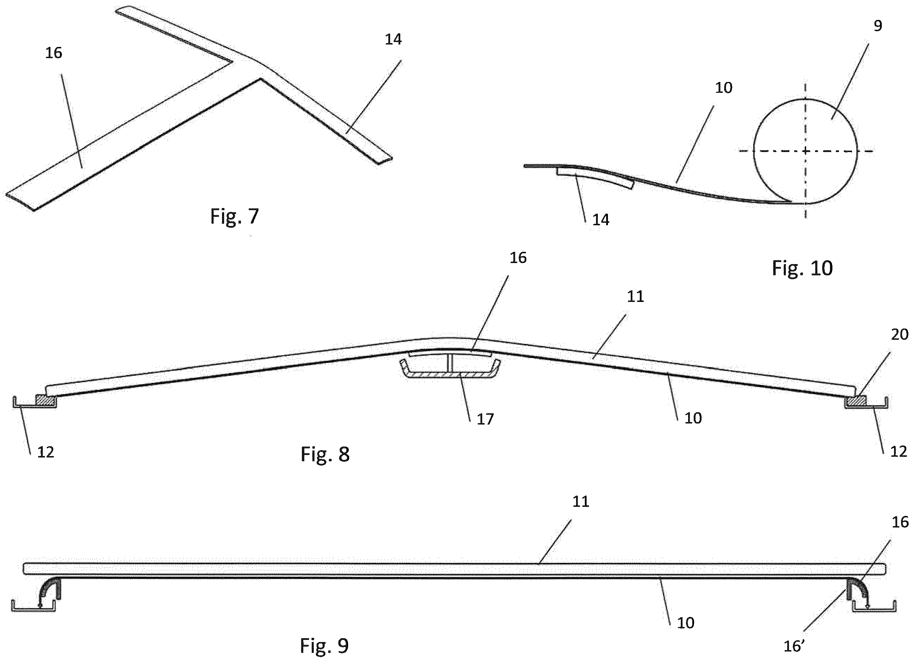

Fig. 7 is a perspective view of the transverse and longitudinal guide.
Fig. 8 is an enlarged sectional view along the line VIII-VIII in Fig. 6.
Fig. 9 is a view corresponding to that of Fig. 8, but showing a different embodiment of the sunshade assembly.
Fig. 10 is a sectional view along the line X-X in Fig. 6.

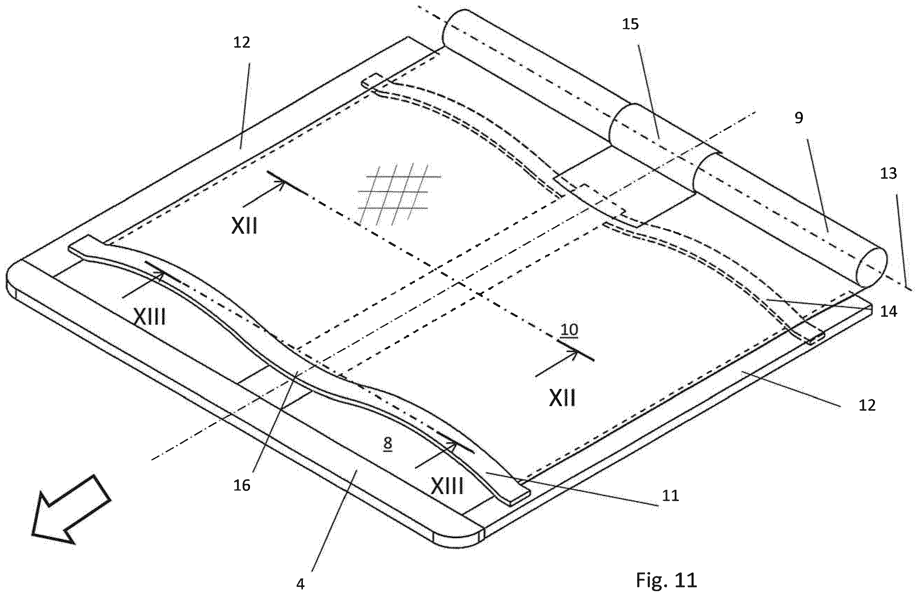

Fig. 11 is a perspective view corresponding to that of Fig. 1A, but showing another embodiment of the sunshade assembly.

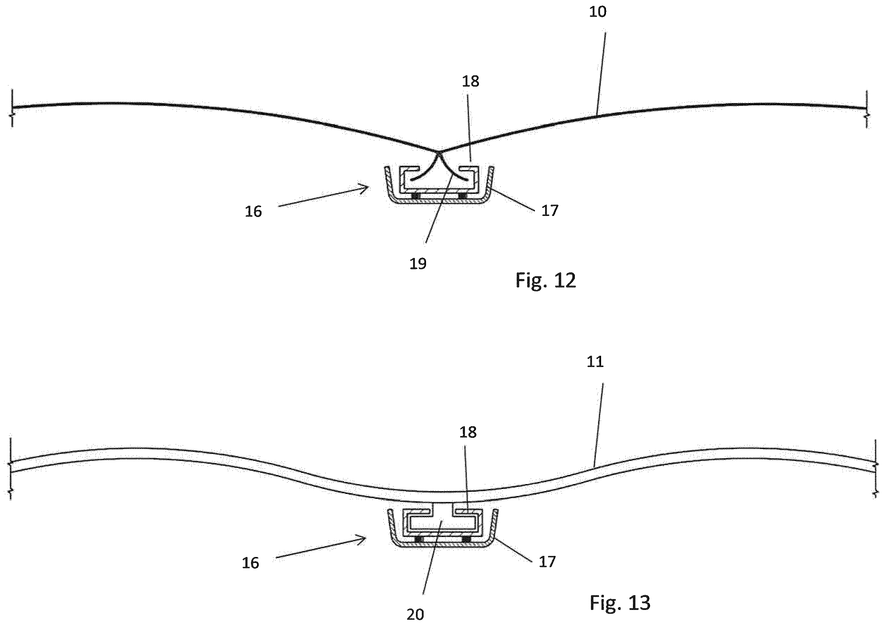

Figs. 12 and 13 are enlarged sectional views along the lines XII-XII and XIII-XIII in Fig. 11, respectively.

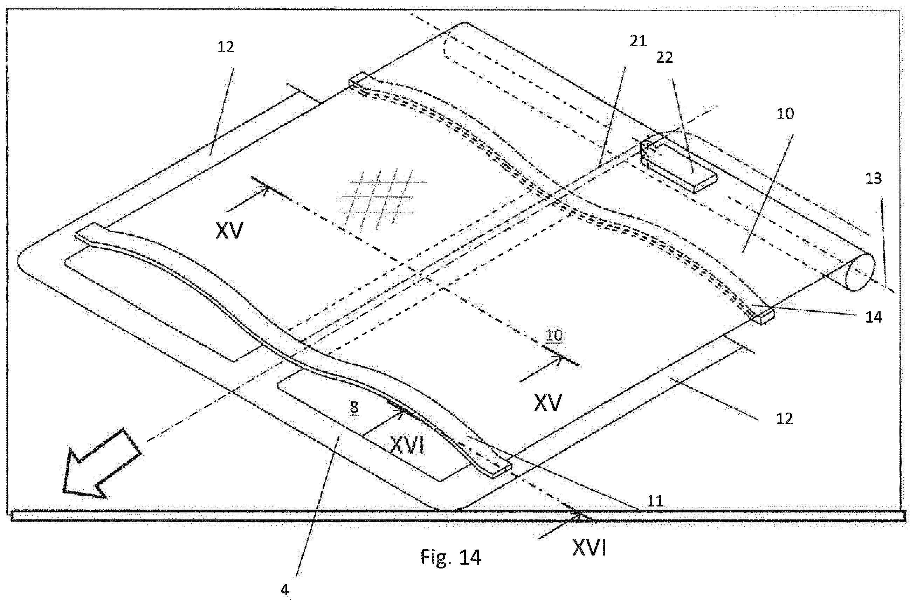

Fig. 14 is a perspective view corresponding to that of Fig. 1A, but showing yet another embodiment of the sunshade assembly.

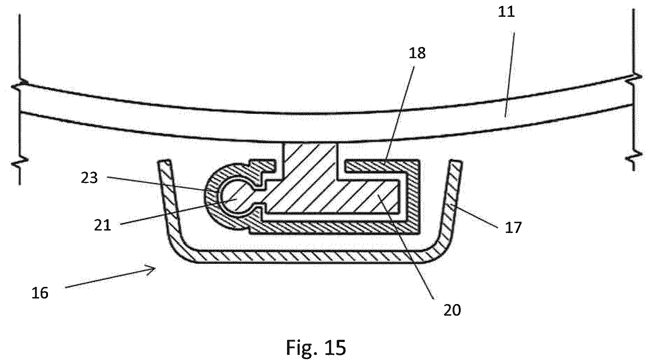

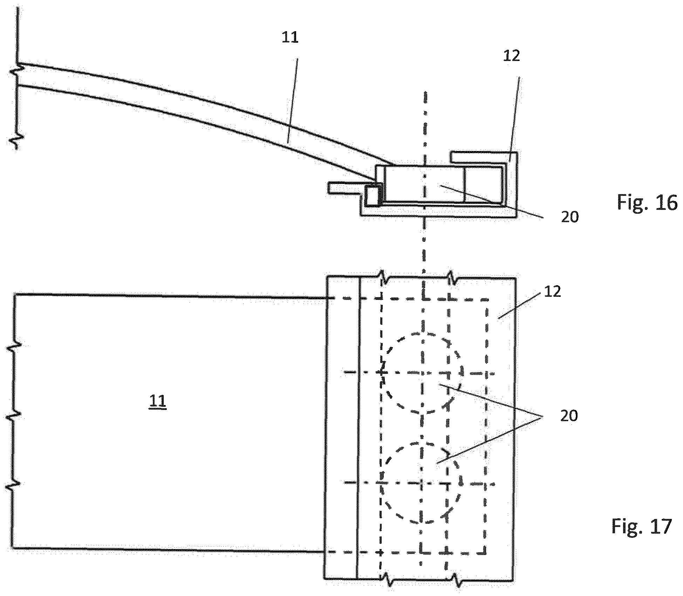

Figs. 15 and 16 are enlarged sectional views along the lines XV-XV and XVI-XVI in Fig. 14, respectively.
Fig. 17 is a bottom view of the subject of Fig. 16.

Fig. 1 shows a small portion of a fixed roof 1 of a vehicle, such as a passenger car or utility vehicle. It comprises a roof opening 2 for the purpose of accommodating an open roof construction. The fixed roof 1 may be part of the vehicle or part of the open roof construction replacing the normal roof of the vehicle. In this embodiment, the open roof construction comprises a closure element 3 in the form of a rigid panel, which is at least partly transparent by being made from glass or plastic, and which closes the roof opening 2 in its closed position (Fig. 1) and which can be opened from said closed position. It may for example be opened by moving the rear side of the panel 3 upwardly and sliding the panel 3 rearwardly over the fixed roof 1 or any other part present behind the roof opening 1, for example a second transparent panel which may be fixed.

The open roof construction comprises a stationary part or frame 4 which is fixed to the fixed roof 1, here represented by a fixing screw 5. The frame 4 comprises longitudinal guiderails laterally of the passage opening 8 to movably guide the operating mechanism for the panel 3. A drive member, in particular an electric motor, is used to drive the operating mechanism through drive cables which are guided in drive cable guides 6 shown in Fig. 1.

The drawing further shows a portion of a sunshade or rollo assembly 7 which is movably arranged below the panel 3 and which is adapted to close and open a passage opening 8 in the frame situated below the roof opening 2.

Figs. 1A, 3, 4 and 5 show a first embodiment of the sunshade assembly. It includes a winding mechanism (only a winding tube 9 is shown) and a screen 10 which is stretched in a non-linear shape in transverse direction during use. The screen 10 is generally of a textile material which may be fully or partially of an elastic nature such that it can be stretched elastically in longitudinal and/or lateral direction. It has an upper and lower surface, lateral side edges, and a leading edge having a beam 11 attached to it. The ends of the beam 11 and side edges of the screen 10 are generally guided in lateral guides 12 which extend in longitudinal direction of the open roof construction near the edges of the passage opening 8 (and in extension thereof) and substantially below the lateral edges of the roof opening 2. An attached edge of the screen 10 (opposite to the beam 11) is attached to the winding tube 9 of the winding mechanism, which is rotatable about a transverse axis of rotation 13 for winding and unwinding said screen 9 between an extended position screening the passage opening 8 and thereby roof opening 2 and a retracted position releasing said passage and roof openings.

A transverse guide 14 for the screen 9 extends in transverse direction and is attached with its ends to the stationary part 4 of the open roof construction, in this case to the lateral guides 12. The transverse guide 13 is positioned between the beam 11 and the winding tube 9, when the screen 10 is unwound from or wound on the winding tube 9.In the latter case the beam 11 is positioned close to the transverse guide 14. The transverse guide 13 is positioned close to the rear edge of the passage opening 8, and may either be just behind (so invisible to the occupants), at or in front of this rear edge (visible to the occupants). The transverse guide 14 is at least partly curved in transverse direction to form the screen 10 from a linear shape on the winding tube 9 into a non-linear shape between the transverse guide 14 and the beam 11. In this first embodiment, the transverse guide 14 has a central concave section 14' and a convex section 14" on either side thereof. Here, the beam 11 has a shape in transverse direction which is similar to that of the transverse guide 14. The convex sections 14" are bow or arch shaped and extend from the lateral guides upwardly, so that more headroom is created for the occupants of the vehicle, which are normally positioned between the centre and the sides of the interior of the vehicle. The centre of the concave section 14' may for example be at the same level again as the lateral guides 12, but other variations are conceivable.

Fig. 3 shows that in this embodiment the transverse guide 14 is also shaped such that at least the rear edge of the transverse guide 14 has a non-linear shape when viewed from above. In this case the front and rear edges of the transverse guide are parallel to each other. Figs. 4 and 5 show that at the bottom of concave section 14' and at the top of convex section 14'' both the height and the longitudinal position of the transverse guide is different. The extent of the rear edge of the transverse guide 14 is such that, for all points that are located on a line perpendicular to and between the lateral edges of the screen 10, a distance from each of said points via the transverse guide 14 and via a surface of the winding tube 9 to a line on the surface of the winding tube 9 that extends parallel to the axis of rotation 13 is the same for all of said points. Due to this equal distance the screen 10 is stretched equally over its whole width, so that there is no risk of formation of wrinkles in the screen 10 due to uneven stretching. This principle is set out in US patent 6,546,990. To more easily obtain this effect and not loose headroom due to a lower of higher position of the winding tube 9, the screen 10 is here led to the upper side of the winding tube 9 to create the different angles of the screen 10 between the rear edge of the transverse guide 14 and the winding tube 9.

In this embodiment, the transverse guide is such that it guides the upper and lower surfaces of screen 10 along the complete width thereof. For this purpose, the transverse guide 14 has a longitudinal slot 14A extending along substantially the complete transverse length of the transverse guide 14, such that the screen 10 can be guided through the slot 14A. The upper and lower walls of the slot 14A in the transverse guide 14 are parallel to each other so that they both engage the upper and lower surfaces of the screen 10 along substantially its complete width.

Fig. 2 shows a variation of the transverse guide 14 having a lower guide part 15A similar to a lower portion below slot 14A in the transverse guide of Fig. 3, and having an upper guide part 15B which only extends through the central portion of the concave section 14' of the transverse guide 14. This upper guide part 15B urges the central portion of the screen 10 into the concave section 14' in order to follow the curve of the lower guide part 15A of the transverse guide 14. In the other sections 14" of the transverse guide 14, the tension and the gravity will keep the screen 10 in contact with the lower guide part 15A of the transverse guide 14, but in the concave section 14' the tension will try to lift the screen 10 from the lower guide part 15A, so that the upper guide part 15B is needed to form the screen 10 in the shape of the lower guide part 15A. The upper guide part can be attached to the stationary part 4 of the open roof construction at a position behind the winding tube (cf. Fig. 11). The lower guide part 15A may be attached to the lower side of the lateral guides 12 for example.

Fig. 6 shows a further embodiment in which both the transverse guide 14 and the beam 11 having a roof shape including two inclined straight lateral sections and a central curved section connecting the lateral sections. Fig. 10 illustrates that the cross section of transverse guide 14 may be slightly concavely curved and inclined backwardly and downwardly to smoothly guide the screen between the transverse guide 14 and the winding tube 9.

To support the screen 10 in its central portion along its whole length between the transverse guide and the beam 11 in all positions thereof, there is provided a longitudinal guide 16 having a slightly convexly curved cross section of its upper guide surface. The longitudinal guide 16 will be attached to the stationary part 4 at the front of the passage opening 8 and to transverse guide 14 and may form one part therewith, as is shown in Fig. 7, but could as well be a separate part.

Fig. 8 shows that a cover 17 may be provided below longitudinal guide 16, which may have just a visual function or carry accessories, such as lights, compartments, switches or the like.

Fig. 9 shows a further embodiment including two longitudinal guides 16 positioned close to the lateral guides 12 but at a higher level so that the screen 10 is guided from the lateral guides 12 in upward direction and then in a straight line to the opposite longitudinal guide 16. The cross section of the longitudinal guides 16 is convexly curved so that the screen 10 is smoothly guided over its upper surface. The longitudinal guides 16 may include a substantially vertical side cover 16' on their sides facing the interior of the vehicle so as to hide the operating mechanism for the panel 3. The transverse guide 14 will have a shape similar to that of the screen 10 in Fig. 9. The beam in Fig. 9 is shaped differently at the ends. The edges of screen 10 will be attached then to slides supporting beam 11 (not shown).

The guidance of the lateral side edges of the screen 10 in all embodiments will generally be such that these side edges will be held substantially in position when lateral forces are exerted on the screen 10. The side edges may for example be provided with strips held in a groove of the lateral guides 12 as is known in the prior art, for example from US patent 9, 090, 147.

Fig. 11 shows still another embodiment of the sunshade assembly. The transverse guide 14 is constructed similar to that of Fig. 3, while beam 11 is similar to that of Fig. 1A. This embodiment also includes a longitudinal guide 16 which is positioned in the centre between lateral guides 12 and below the bottom of concave section 14' of transverse guide. Due to this position, the beam 11 will not guide or support the screen 10 in the position between the beam 11 and transverse guide 14 without further measures, as the tension in the screen will pull it away from the longitudinal guide 16. For this reason, longitudinal 16 comprises a longitudinal guiderail 18 in which guide feet 19 on the lower surface of screen 10 engage. These guide feet 19 extend along the whole length of screen 10 and are resilient such that when they exit the guiderail 18 by sliding out of it just before the screen 10 is wound on the winding tube they will bend back to the lower surface of screen 10 automatically and/or are forced by some sort of guide, so that the volume of the wound screen 10 on the winding tube 9 is not increased too much. The beam 11 comprises a slide shoe 20 fitting into the guiderail 18 to guide beam 11 also in its centre. A cover 17 is again present in this embodiment.

The embodiment of Fig. 14 - 17 includes a drive cable 21 attached to the central slide shoe 20 of beam 10 instead of the slide shoes 24 at the lateral ends of beam 11. A drive motor 22 may be attached to the stationary part 4 at a position below or behind winding tube 9, although a position on the opposite edge of the passage opening 8 is conceivable. The guiderail 18 includes a cable channel 23 so that it can guide the drive cable in both pushing and pulling situations to close and open the screen 10.

Fig. 16 and 17 show the slide shoes 24 attached to the ends of beam 11. These are special slide shoes counteracting a tilting movement of beam 11 when eccentric forces are exerted thereon, here through a set of rotatable rollers.

It will be clear from the foregoing description that the invention provides an open roof construction having a sunshade assembly of which the screen is guided and supported in an effective manner so that sagging is prevented and additional headroom for the vehicle's occupants is provided.

The invention is not limited to the embodiments shown in the drawings and described above which may be varied in different manners within the scope of the appended claims. For example, it is possible to have more than one or two longitudinal guides, in particular two near the lateral guides and one in the middle of the screen. Furthermore, it is noted that it is conceivable to use the sunshade assembly as described also for roofs only having one or more fixed transparent panels.

## Claims

1. Open roof construction for a vehicle having a roof opening (2) in its fixed roof (1), comprising a stationary part (4) and an at least partially transparent closure element (3) which is movably supported by the stationary part in order to move between a closed position within the roof opening and an open position, a sunshade assembly (7) including a winding mechanism (9, 13) and a screen (10) which is stretched in a non-linear shape in transverse direction during use, the screen having an upper and lower surface, lateral side edges guided by lateral guides (12), a leading edge having a beam (11) attached to it and also guided by the lateral guides (12), and an attached edge, the winding mechanism comprising a winding tube (9) connected to the attached edge of the screen and which is rotatable about an axis of rotation (13) for winding and unwinding said screen between an extended position screening said roof opening and a wound position releasing said roof opening; a transverse guide (14) extending in transverse direction and being disposed between the beam and the winding tube when the screen is wound onto the winding tube, the transverse guide being at least partly non-linear in transverse direction to form the screen in a non-linear shape between the guide and the beam, **characterized by** at least one longitudinal guide (16) for the screen (10) extending parallel to but at a higher level than the lateral guides (12) and extending between the transverse guide (14) and the stationary part (4) on the opposite side of the roof opening (2), the at least one longitudinal guide (16) being adapted to guide the screen from below.

2. Open roof construction as claimed in claim 1, wherein one longitudinal guide (16) extends in the middle of the roof opening (2).

3. Open roof construction as claimed in claim 2, wherein the longitudinal guide (16) is covered from below by a cover (17) carrying accessories, such as lights, compartments, switches or the like.

4. Open roof construction as claimed in claim 1, wherein two longitudinal guides (16) extend next to but at a higher level than the lateral guides (12).

5. Open roof construction as claimed in claim 4, wherein the longitudinal guides (16) are convexly curved in cross-section and/or comprise integrated side covers (16').

6. Open roof construction as claimed in claim 1, wherein the transverse guide (14) guides at least a part of both the upper and lower surfaces of the screen (10) in order to urge the screen into a partly convex and partly concave shape,

7. Open roof construction as claimed in claims 2 and 6, wherein the at least one longitudinal guide (16) is positioned at the bottom of the concave shape and includes a guiderail (18), whereas the screen comprises one or more guide feet (19) adapted to engage the guiderail on the one hand and adapted to lie flat against the screen when it is wound on the other hand.

8. Open roof construction as claimed in claim 7, wherein the longitudinal guide (16) also guides a drive cable (21) extending between the beam (11) and a drive motor (22).

9. Open roof construction as claimed in claim 1 or 2, wherein at least the transverse guide (14) has a central concave section (14') and a convex section (14") on either side thereof.

10. Open roof construction as claimed in any of the preceding claims, wherein the transverse guide (14) guides the upper and lower surfaces of the screen (10) substantially along the complete width of the screen.

11. Open roof construction as claimed in claim 9, wherein the transverse guide (14) guides the upper surface of the screen only in the concave section (14').

12. Open roof construction as claimed in any of the preceding claims, wherein the transverse guide (14) includes upper and lower guide parts (15A, 15B) that overlap at least partly when viewed from above.

## Patentansprüche

1. Offendachkonstruktion für ein Fahrzeug mit einer Dachöffnung (2) in seinem feststehenden Dach (1), aufweisend ein ortsfestes Teil (4) und ein wenigstens teilweise transparentes Verschlusselement (3), welches an dem ortfesten Teil bewegbar abgestützt ist, um sich zwischen einer geschlossenen Position innerhalb der Dachöffnung und einer offenen Position zu bewegen, eine Sonnenschutzanordnung (7) mit einem Wickelmechanismus (9, 13) und einer Blende (10), welche in einer nichtlinearen Form in Querrichtung während der Benutzung gestreckt ist, wobei die Blende eine obere und eine untere Fläche, seitliche Seitenränder, die von seitlichen Führungen (12) geführt sind, einen führenden Rand mit einem Balken (11), der an diesem befestigt ist und auch von den seitlichen Führungen (12) geführt ist, und einen befestigten Rand aufweist, wobei der Wickelmechanismus ein Wickelrohr (9) aufweist, das mit dem befestigten Rand der Blende verbunden ist und welches um eine Drehachse (13) zum Aufwickeln und Abwickeln der Blende zwischen einer ausgestreckten Position, welche die Dachöffnung abschirmt, und einer gewickelten Position, welche die Dachöffnung freigibt, drehbar ist; eine Querführung (14), die sich in Querrichtung erstreckt und zwischen dem Balken und dem Wickelrohr angeordnet ist, wenn die Blende auf das Wickelrohr gewickelt wird, wobei die Querführung wenigstens teilweise nichtlinear in Querrichtung ist, um die Blende in einer nichtlinearen Form zwischen der Führung und dem Balken zu formen, **gekennzeichnet durch** wenigstens eine Längsführung (16) für die Blende (10), die sich parallel zu den, jedoch in einer höheren Ebene als die seitlichen Führungen (12) erstreckt und sich zwischen der Querführung (14) und dem ortsfesten Teil (4) an der entgegengesetzten Seite der Dachöffnung (2) erstreckt, wobei die wenigstens eine Längsführung (16) angepasst ist, um die Blende von unten zu führen.

2. Offendachkonstruktion nach Anspruch 1, wobei sich eine Längsführung (16) in der Mitte der Dachöffnung (2) erstreckt.

3. Offendachkonstruktion nach Anspruch 2, wobei die Längsführung (16) von unten durch eine Abdeckung (17) abgedeckt ist, die Zubehörteile, wie Leuchten, Fächer, Schalter oder dergleichen, trägt.

4. Offendachkonstruktion nach Anspruch 1, wobei sich zwei Längsführungen (16) neben den, jedoch in einer höheren Ebene als die seitlichen Führungen (12) erstrecken.

5. Offendachkonstruktion nach Anspruch 4, wobei die Längsführungen (16) im Querschnitt konvex gekrümmt sind und/oder integrierte Seitenabdeckungen (16') aufweisen.

6. Offendachkonstruktion nach Anspruch 1, wobei die Querführung (14) wenigstens einen Teil sowohl der oberen als auch der unteren Fläche der Blende (10) führt, um die Blende in eine teilweise konvexe und teilweise konkave Form zu drängen.

7. Offendachkonstruktion nach den Ansprüchen 2 und 6, wobei die wenigstens eine Längsführung (16) an der Unterseite der konkaven Form positioniert ist und eine Führungsschiene (18) aufweist, während die Blende einen oder mehrere Führungsfüße (19) aufweist, die angepasst sind, um einerseits in die Führungsschiene einzugreifen, und angepasst sind, um andererseits an der Blende flach anzuliegen, wenn sie aufgewickelt ist.

8. Offendachkonstruktion nach Anspruch 7, wobei die Längsführung (16) auch ein Antriebsseil (21) führt, das sich zwischen dem Balken (11) und einem Antriebsmotor (22) erstreckt.

9. Offendachkonstruktion nach Anspruch 1 oder 2, wobei wenigstens die Querführung (14) einen mittleren konkaven Abschnitt (14') und einen konvexen Abschnitt (14") an jeder Seite davon aufweist.

10. Offendachkonstruktion nach einem der vorhergehenden Ansprüche, wobei die Querführung (14) die obere und die untere Fläche der Blende (10) im Wesentlichen entlang der kompletten Breite der Blende führt.

11. Offendachkonstruktion nach Anspruch 9, wobei die Querführung (14) die obere Fläche der Blende nur in dem konkaven Abschnitt (14') führt.

12. Offendachkonstruktion nach einem der vorhergehenden Ansprüche, wobei die Querführung (14) ein oberes und ein unteres Führungsteil (15A, 15B) aufweist, die von oben betrachtet wenigstens teilweise überlappen.

## Revendications

1. Construction de toit ouvrant pour un véhicule ayant une ouverture de toit (2) dans son toit fixe (1), comprenant une partie immobile (4) et un élément de fermeture au moins partiellement transparent (3) qui est supporté mobile par la partie immobile afin de se déplacer entre une position fermée au sein de l'ouverture de toit et une position ouverte, un ensemble pare-soleil (7)comportant un mécanisme d'enroulement (9, 13) et un élément d'occultation (10) qui est étiré en une forme non linéaire en direction transversale pendant l'utilisation, l'élément d'occultation ayant une surface supérieure et inférieure, des bords de côté latéraux guidés par des guides latéraux (12), un bord d'attaque ayant un longeron (11) fixé à celui-ci et guidé également par les guides latéraux (12), et un bord fixé, le mécanisme d'enroulement comprenant un tube d'enroulement (9) raccordé au bord fixé de l'élément d'occultation et qui peut tourner autour d'un axe de rotation (13) pour enrouler et dérouler ledit élément d'occultation entre une position étendue occultant ladite ouverture de toit et une position enroulée libérant ladite ouverture de toit ; un guide transversal (14) s'étendant en direction transversale et étant disposé entre le longeron et le tube d'enroulement lorsque l'élément d'occultation est enroulé sur le tube d'enroulement, le guide transversal étant au moins en partie non linéaire en direction transversale pour former l'élément d'occultation en une forme non linéaire entre le guide et le longeron, **caractérisée par** au moins un guide longitudinal (16) pour l'élément d'occultation (10) s'étendant parallèle aux guides latéraux (12) mais à un niveau plus haut que ceux-ci et s'étendant entre le guide transversal (14) et la partie immobile (4) sur le côté opposé de l'ouverture de toit (2), l'au moins un guide longitudinal (16) étant adapté pour guider l'élément d'occultation par en dessous.

2. Construction de toit ouvrant selon la revendication 1, dans laquelle un guide longitudinal (16) s'étend au milieu de l'ouverture de toit (2).

3. Construction de toit ouvrant selon la revendication 2, dans laquelle le guide longitudinal (16) est couvert par en dessous par un élément couvrant (17) portant des accessoires, tels que des lumières, des compartiments, des interrupteurs ou similaires.

4. Construction de toit ouvrant selon la revendication 1, dans laquelle deux guides longitudinaux (16) s'étendent près des guides latéraux (12) mais à un niveau plus haut que ceux-ci.

5. Construction de toit ouvrant selon la revendication 4, dans laquelle les guides longitudinaux (16) sont incurvés de façon convexe en section transversale et/ou comprennent des éléments couvrants de côté intégrés (16').

6. Construction de toit ouvrant selon la revendication 1, dans laquelle le guide transversal (14) guide au moins une partie des deux surfaces supérieure et inférieure de l'élément d'occultation (10) afin de pousser l'élément d'occultation dans une forme en partie convexe et en partie concave.

7. Construction de toit ouvrant selon les revendications 2 et 6, dans laquelle l'au moins un guide longitudinal (16) est positionné en bas de la forme concave et comporte un rail de guidage (18), tandis que l'élément d'occultation comprend un ou plusieurs pieds de guidage (19) adaptés pour s'enclencher avec le rail de guidage d'une part et adaptés pour se trouver à plat contre l'élément d'occultation lorsqu'il est enroulé d'autre part.

8. Construction de toit ouvrant selon la revendication 7, dans laquelle le guide longitudinal (16) guide également un câble d'entraînement (21) s'étendant entre le longeron (11) et un moteur d'entraînement (22).

9. Construction de toit ouvrant selon la revendication 1 ou 2, dans laquelle au moins le guide transversal (14) a une section concave centrale (14') et une section convexe (14") sur l'un ou l'autre de ses côtés.

10. Construction de toit ouvrant selon l'une quelconque des revendications précédentes, dans laquelle le guide transversal (14) guide les surfaces supérieure et inférieure de l'élément d'occultation (10) sensiblement sur toute la largeur de l'élément d'occultation.

11. Construction de toit ouvrant selon la revendication 9, dans laquelle le guide transversal (14) guide la surface supérieure de l'élément d'occultation uniquement dans la section concave (14').

12. Construction de toit ouvrant selon l'une quelconque des revendications précédentes, dans laquelle le guide transversal (14) comporte des parties de guidage supérieure et inférieure (15A, 15B) qui se chevauchent au moins en partie dans une vue de dessus.
